# EUROPÄISCHE PATENTSCHRIFT

(11) **EP 3 644 688 B1**
(45) Veröffentlichungstag und Bekanntmachung des Hinweises auf die Patenterteilung: **01.12.2021**
(21) Anmeldenummer: 19201616.0
(22) Anmeldetag: 07.10.2019
(51) Int. Cl.: H05B 3/74, H05B 3/64

(54) **HEIZEINRICHTUNG UND ELEKTROKOCHGERÄT**
HEATING DEVICE AND ELECTRIC COOKING APPLIANCE
CHAUFFAGE ET APPAREIL DE CUISSON ÉLECTRIQUE

(30) Priorität: 24.10.2018 DE 102018218245
(43) Veröffentlichungstag der Anmeldung: 29.04.2020
(73) Patentinhaber: E.G.O. Elektro-Gerätebau GmbH, 75038 Oberderdingen (DE)
(72) Erfinder: Rickert, Jochen, 75038 Oberderdingen (DE)
(74) Vertreter: Patentanwälte Ruff, Wilhelm, Beier, Dauster & Partner mbB

(56) Entgegenhaltungen:
- EP-A1- 1 011 296
- EP-A2- 0 871 346
- DE-A1- 4 229 375
- DE-A1- 19 638 640
- GB-A- 2 324 693
- US-A- 5 837 975

## Beschreibung

Die Erfindung betrifft eine Heizeinrichtung, wie sie insbesondere für ein Elektrokochgerät bzw. in einem Elektrokochgerät verwendet werden kann, beispielsweise als Kochfeld, Warmhalteplatte oder als Backofen. Ebenso betrifft die Erfindung ein entsprechendes Elektrokochgerät mit mindestens einer solchen Heizeinrichtung.

Aus der DE 25 51 137 A1 und der DE 42 29 375 A1 ist jeweils eine Heizeinrichtung bekannt, die in einem Kochfeld unter einer Kochfeldplatte eingebaut sein kann. Auf einem flachen Tragkörper aus elektrisch und thermisch isolierendem Material sind mehrere lange bzw. langgestreckte Heizleiter befestigt. Von den Heizleitern stehen nach unten Halteglieder ab, die in den Tragkörper eingedrückt sind und so den Heizleiter aufrechtstehend halten. Dabei kann der Heizleiter im Betrieb glühen im sichtbaren Bereich mit Temperaturen bis etwas über 1000°C.

Aus der GB 2 324 693 A ist eine weitere entsprechende Heizeinrichtung für ein Elektrokochgerät bekannt. Ein Heizleiter weist an seiner Unterseite abstehende Halteglieder auf, und mit diesen ist er in einen Tragkörper eingedrückt. Der Tragkörper kann eine Glimmerschicht sein, wobei unter dem Tragkörper noch eine dicke Wärmedämmschicht aus mikroporösem Dämmmaterial angeordnet ist.

Aus der EP 0 871 346 A2 ist eine nochmals weitere entsprechende Heizeinrichtung für ein Elektrokochgerät bekannt, bei der ebenfalls ein Heizleiter von seiner Unterkante nach unten stehende Halteglieder aufweist. Diese sind in einen dünnen Tragkörper eingedrückt, der unter anderem aus Glimmer bestehen kann. Diese Baueinheit kann dann in eine Heizeinrichtung eingebaut werden, beispielsweise auf einen vorgenannten Träger aus mikroporösem Dämmmaterial aufgelegt werden.

### Aufgabe und Lösung

Der Erfindung liegt die Aufgabe zugrunde, eine eingangs genannte Heizeinrichtung sowie ein entsprechendes Elektrokochgerät zu schaffen, mit denen Probleme des Standes der Technik gelöst werden können und es insbesondere möglich ist, für einen Tragkörper ein stabiles, günstiges und vorteilhaftes Material zu verwenden.

Gelöst wird diese Aufgabe durch eine Heizeinrichtung mit den Merkmalen des Anspruchs 1 sowie durch ein Elektrokochgerät mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der Merkmale nur für die Heizeinrichtung oder nur für das Elektrokochgerät beschrieben. Sie sollen jedoch unabhängig davon sowohl für die Heizeinrichtung als auch für das Elektrokochgerät unabhängig und selbständig voneinander gelten können. Der Wortlaut der Ansprüche wird durch ausdrückliche Bezugnahme zum Inhalt der Beschreibung gemacht.

Die Heizeinrichtung weist mindestens einen langen Heizleiter auf, der zwar langgestreckt hergestellt sein kann, vorteilhaft im zusammengebauten Zustand aber verkürzt ist. Dazu ist er als gewelltes Flachband ausgebildet, das zumindest an seiner Unterseite im Abstand voneinander angeordnete Halteglieder aufweist. Diese Halteglieder stehen nach unten über bzw. stehen nach unten ab. Die Heizeinrichtung weist einen vorgenannten Tragkörper auf, auf dessen Oberseite der Heizleiter angeordnet und befestigt ist, indem die Halteglieder in den Tragkörper eingedrückt sind. Insbesondere erfolgt dieses Eindrücken der Halteglieder in den Tragkörper ohne dass zuvor Vertiefungen, Ausnehmungen odgl. für die Halteglieder hergestellt oder vorbereitet worden sind, wobei solche alternativ auch zuvor hergestellt oder vorbereitet sein können. Der Heizleiter mit den Haltegliedern wird einfach in den Tragkörper bzw. dessen Oberseite eingedrückt mit entsprechender Kraft. Dabei sollte der Heizleiter, was aus dem vorgenannten Stand der Technik für sogenannte Strahlungsheizeinrichtungen bekannt ist, stabilisiert bzw. gehalten werden, damit er nicht verkippt. Dies würde sich negativ auswirken auf die Anordnung des Heizleiters auf dem Tragkörper. Des Weiteren ist eine Stützvorrichtung für den Tragkörper vorgesehen. Diese stützt den Tragkörper zumindest in seinem Außenbereich und/oder entlang eines Außenrands nach unten ab. Dann kann ein relativ dünner Tragkörper verwendet werden, der zwar eigenstabil ist, aber bereits durch die Last der darauf angeordneten Heizleiter zu stark durchgebogen werden könnte. Bevorzugt kann die Stützvorrichtung den Tragkörper auch an zumindest einer Stelle im mittleren Bereich bzw. in der Mitte unterstützen.

Erfindungsgemäß ist vorgesehen, dass der Tragkörper aus verpresstem und/oder verklebtem Glimmer-Material besteht. Somit wird ein anderes Isoliermaterial verwendet als im Stand der Technik bekannt, insbesondere für Strahlungsheizeinrichtungen bekannt und verwendet. Derartiges Glimmer-Material ist elektrisch ausreichend isolierend und weist ausreichend gute thermische Dämm-Eigenschaften auf. Des Weiteren ist es ausreichend stabil, um die darin eingedrückten Halteglieder und somit auch die Heizleiter zu halten.

In vorteilhafter Ausgestaltung der Erfindung weist das Glimmer-Material, vorzugsweise bis zu etwa 250°C, einen Ausdehnungskoeffizienten auf, der ähnlich ist wie derjenige des Heizleiters. Der Heizleiter ist vorteilhaft eine FeCrAI-Legierung, wie sie aus dem Stand der Technik für derartige Heizleiter bekannt ist, insbesondere auch wenn diese im sichtbaren Bereich glühen sollen im Heizbetrieb. Durch diese angepassten Ausdehnungskoeffizienten ist die mechanische Stabilität bzw. der dauerhaft stabile Aufbau der Heizeinrichtung leichter zu erreichen. Über der vorgenannten Temperatur von 250°C kann der Ausdehnungskoeffizient solcher Heizleiter etwas ansteigen, allerdings sollte das in vorteilhafter Ausgestaltung durch eine gewellte Form des Heizleiters kein Problem darstellen. Des Weiteren können sich somit bei höheren Temperaturen die Halteglieder besser im Träger verkrallen durch stärkere Ausdehnung.

Bevorzugt ist das Glimmer-Material Mikanit. Derartiges Mikanit bzw. in allgemeiner Form Glimmer-Material ist beispielsweise auch bekannt von Toastern, bei denen Heizwendeln um eine flache Platte gewickelt werden, um mechanisch gehaltert zu sein. Dabei sind die Heizleiter allerdings nicht in die Platte selbst eingedrückt, höchstens in vorgefertigte Schnitte hineingezogen. Das Mikanit kann als Hauptbestandteil Muskovit aufweisen, alternativ Phlogopit für noch höhere Temperaturen.

In Ausgestaltung der Erfindung kann vorgesehen sein, dass der Tragkörper als Platte ausgebildet ist. Er kann insbesondere eine ebene Oberseite aufweisen. Die Oberseite kann aber auch leicht gewölbt sein, entweder rinnenförmig oder konvex oder konkav. Auf der Oberseite ist der mindestens eine Heizleiter angeordnet und heizt dann nach oben. Besonders bevorzugt ist der Tragkörper eine dünne planparallele Platte. Eine Dicke zwischen 0,1 mm und 2 mm, insbesondere 0,2 mm bis 0,6 mm, wird als vorteilhaft angesehen. Im unteren Dickenbereich kann diese gerade noch stabil sein, damit sich die eingedrückten Halteglieder des Heizleiters nicht wieder von alleine lösen. Gleichzeitig wird für einen sehr dünnen Tragkörper nicht so viel Glimmer-Material benötigt.

Wird der Tragkörper dicker gemacht, so ist er besser eigenstabil. Auch seine elektrischen und thermischen Isoliereigenschaften werden dann besser. Unter Umständen kann der Tragkörper auch derart eigenstabil sein, dass die Stützvorrichtung nur im Außenbereich bzw. entlang des Außenrands vorgesehen sein muss. Er kann so dick sein, dass die entsprechend kurzen Halteglieder nicht an der Unterseite wieder hervorkommen. Bevorzugt jedoch treten die Halteglieder aus der Unterseite des Tragkörpers wieder heraus bzw. stehen über sie über.

In weiterer Ausgestaltung der Erfindung können im Bereich des Außenrands des Tragkörpers, insbesondere zusammen mit der Stützvorrichtung, Abstandshalter vorgesehen sein. Diese können nach oben über die Oberseite des Tragkörpers hinaus abstehen. Vorteilhaft liegen dabei die Abstandshalter auf der Oberseite des Tragkörpers auf. Besonders vorteilhaft können die Abstandshalter als im Wesentlichen durchgängig umlaufender Ring ausgebildet sein, der es ermöglicht, einen Abstand der Heizeinrichtung und vor allem auch das Tragkörpers mit den Heizleitern darauf zu einer darüber angeordneten Kochfeldplatte eines Kochfelds oder einer anderen Abdeckung einzuhalten. Wird die Heizeinrichtung dagegen in einem Backofen eingesetzt, insbesondere als Oberhitze- oder Unterhitze-Heizkörper, und liegt dabei evtl. sogar frei, so werden die Abstandshalter auf der Oberseite möglicherweise nicht benötigt.

Vorteilhaft kann es vorgesehen sein, dass die Halteglieder als eine Art Bügel separat vom Heizleiter hergestellt sind und dann über diesen übergelegt werden. Diese bügelartigen Halteglieder werden dann zusammen mit dem Heizleiter auf der Oberseite des Tragkörpers befestigt, insbesondere durch Eindrücken in den Tragkörper.

Besonders vorteilhaft jedoch sind die Halteglieder integral aus dem Heizleiter herausgeformt bzw. an diesem angeformt, die Heizleiter sind also einstückig und einteilig mit dem Heizleiter verbunden. Somit bestehen sie aus demselben durchgängigen Flachbandmaterial und stehen von einer Unterkante des Heizleiters einteilig und einstückig nach unten vor. Sie sind also integral aus ihm herausgeformt. Dazu kann der Heizleiter als Band aus dem Flachbandmaterial herausgestanzt werden, wobei die Halteglieder an der Unterkante dabei mi ausgebildet werden. Dies ist grundsätzlich aber auch bereits aus der eingangs genannten DE 42 29 375 A1 bekannt.

Eine Länge der Halteglieder kann zwischen 50% und 200% der Höhe des Heizleiters betragen. Alternativ ausgedrückt kann eine Länge der Halteglieder zwischen 1 mm und 6 mm liegen, wobei eine Höhe des Heizleiters in der Regel wenige Millimeter betragen kann, beispielsweise 1,4 mm bis 7 mm.

Der Heizleiter ist erfindungsgemäß gewellt, vorzugsweise gleichmäßig gewellt über seine gesamte Länge hinweg. Diese Wellung kann auch die integral daran ausgebildeten Halteglieder umfassen. Eine Wölbung der Halteglieder in ihrem Längsverlauf weg vom Heizleiter, so dass sie nach Art eines Spatens odgl. gewölbt sind, kann eine deutlich verbesserte Festigkeit beim Einstecken bzw. Eindrücken der Halteglieder in das Glimmer-Material des Tragkörpers unterstützen. Diese somit stabiler ausgebildeten Halteglieder können nicht so leicht umknicken, wenn sie in das Glimmer-Material eingedrückt werden.

Bei der Erfindung sind die Halteglieder zum Erleichtern eines Einstechens in den Tragkörper in ihrem Längsverlauf weg vom Heizleiter bzw. in Richtung quer dazu verjüngt ausgebildet und weisen am freien Ende eine verjüngte freie Spitze auf. Diese kann direkt spitz oder etwas abgerundet ausgebildet sein. Des Weiteren weist ein Halteglied einen an die Unterkante des Heizleiters anschließenden Sockelbereich auf. In diesem Bereich ist es wichtig, dass das Halteglied gut mit dem Heizleiter verbunden ist. Im Sockelbereich weist das Halteglied konstante Breite auf, seine Seitenkanten sind also parallel. An diesen konstant breiten Sockelbereich schließt sich dann die verjüngte freie Spitze an, vorteilhaft direkt. Ein solcher Sockelbereich weist eine Länge zwischen 0,1 mm und 2 mm auf. Der Sockelbereich dient dazu, dass dann, wenn der Heizleiter mit den Haltegliedern in den Tragkörper eingedrückt ist, so dass eine Unterkante des Heizleiters auf der Oberseite ganz oder nahezu aufliegt, die Halteglieder mit dem Sockelbereich in dem Tragkörper sind. Die verjüngte freie Spitze des Halteglieds, die das Eindrücken möglicherweise stark vereinfacht hat, steht dann über die Unterseite des Tragkörpers über. Wenn das Halteglied nur mit dem Sockelbereich im Tragkörper steckt bzw. nur damit direkten Kontakt zum Tragkörper hat, und der Sockelbereich eben gleichbleibende Breite aufweist, wird das Halteglied nicht so leicht aus dem relativ steifen Glimmer-Material herausgedrückt. Der Aufbau ist also stabiler und dauerhafter.

Bei der Erfindung schließt eine vorbeschriebene verjüngte freie Spitze an den genannten Sockelbereich an. Dabei ist diese verjüngte freie Spitze in ihrem oberen Bereich bzw. dort, wo sie direkt an den Sockelbereich anschließt oder aus diesem herausläuft, schmaler als die minimale Breite des Sockelbereichs. Besonders vorteilhaft steht oder ragt der Sockelbereich nicht nur in eine Richtung entlang des Längsverlaufs des Heizleiters über die verjüngte freie Spitze über oder vor, sondern an beiden Seiten. Insbesondere kann die verjüngte freie Spitze in etwa oder genau von der Mitte der Breite des Sockelbereichs nach unten abstehen. Es wird als bevorzugt angesehen, wenn der Sockelbereich einteilig und einstückig aus dem Heizleiter herausläuft bzw. so mit ihm ausgebildet ist, beispielsweise gemäß vorgenanntem Verfahren als Teil des Halteglieds aus einem Flachbandmaterial herausgeformt ist. Ebenso kann die verjüngte freie Spitze vorteilhaft gemeinsam mit dem Sockelbereich als weiteres Teil des Halteglieds herausgeformt sein.

Ein solcher Sockelbereich kann eine Breite in Richtung entlang der Längsrichtung des Heizleiters aufweisen bzw. sozusagen eine Länge aufweisen, die zwischen 2 mm und 10 mm oder zwischen 2 mm und 15 mm liegt. Anders ausgedrückt kann diese Breite des Sockelbereichs zwischen 100% und 400% der Höhe des Heizleiters betragen. Hierzu wird nachfolgend noch Näheres ausgeführt.

Vorteilhaft ist der Sockelbereich nicht in den Tragkörper eingedrückt bzw. befindet sich nicht darin. Ein Tragkörper ist vorzugsweise aus einigermaßen festem Material wie eingangs genanntem Mikanit odgl. hergestellt, so dass keine Kraft aufgewendet werden muss, ein Halteglied auch mit dem Sockelbereich in den Tragkörper einzudrücken. Es reicht das Halteglied einzudrücken. Gleichzeitig wird er dadurch weniger mechanisch geschwächt. Der Sockelbereich kann sich oberhalb des Tragkörpers bzw. dessen Oberfläche befinden, alternativ kann er darauf aufgelegt sein oder sogar aufgrund des Eindrückens des Halteglieds mit der verjüngten freien Spitze daran angedrückt sein. So bildet der Sockelbereich sozusagen eine Auflage für den Heizleiter auf dem Tragkörper, und da der Sockelbereich die vorgenannte Länge von etwa 0,1 mm bis 2 mm weg vom Heizleiter aufweist, verläuft der Heizleiter mit seiner Unterkante um etwa dieses Maß oberhalb der Oberfläche des Tragkörpers. Dies weist den Vorteil auf, dass er dann an seiner Unterseite zum einen nicht vom Tragkörper gekühlt wird und dadurch eine bessere Wärmeentwicklung ermöglicht, insbesondere auch Wärmeabstrahlung nach oben. Zum Anderen erfolgt weniger Wärmeeintrag in den Tragkörper, was diesen ansonsten stärker thermisch und mechanisch belasten würde sowie eine thermische Dämmung in höherem Maße notwendig machen würde. Durch die Verbreiterung des Querschnitts des Heizleiters im Bereich des Halteglieds bzw. des Sockelbereichs ist hier zwar die Wärmeentwicklung bzw. die Heizleistung etwas geringer. Durch die bessere Abstrahlung wird dieser negative Effekt jedoch mehr als wieder ausgeglichen. Des Weiteren kann so auch ein definierter Verlauf des Heizleiters am Tragkörper bzw. oberhalb davon erreicht werden.

Bevorzugt ist vorgesehen, dass pro Halteglied genau ein Sockelbereich vorgesehen ist bzw. alle Halteglieder je einen einzigen Sockelbereich aufweisen. Besonders vorteilhaft sind alle Halteglieder identisch ausgebildet, was für eine möglichst gleichmäßige flächige Verteilung der Wärmeleistung sorgen kann. In nochmals weiterer vorteilhafter Ausgestaltung der Erfindung ist der Heizleiter mit seinen Haltegliedern, insbesondere den verjüngten freien Spitzen, überall gleichmäßig weit in den Tragkörper bzw. dessen Oberfläche eingedrückt. Eine solche gleichmäßige Herstellung ergibt dann auch eine möglichst gleichmäßige Wärmeerzeugung.

Vorteilhaft ist es möglich, dass die verjüngte freie Spitze in dem Bereich, in dem sie an den Sockelbereich anschließt, zuerst eine gleichbleibende Breite aufweist für den vorgenannten Vorteil, dass sie dann mit diesem Bereich etwa gleichbleibender Breite in den Tragkörper eingedrückt bzw. eingebettet ist. Dieser Bereich gleichbleibender Breite kann einen Zusatz-Sockelbereich bilden, wobei der Zusatz-Sockelbereich oben direkt an den Sockelbereich anschließen und unten direkt in die verjüngte freie Spitze übergehen kann. Der tatsächlich verjüngte Bereich bzw. spitze Bereich ragt dann nach unten über die Unterseite des Tragkörpers hinaus. So kann erreicht werden, dass diese verjüngte Spitze nicht so leicht aufgrund ihrer Verjüngung aus dem Tragkörper herausgedrückt werden kann. Hier befindet sich nämlich der Zusatz-Sockelbereich mit gleichbleibender Breite.

Der Sockelbereich kann an seinen beiden Enden hin zum Heizleiter gerade verlaufen, also in einem Winkel von 90° zur sonstigen Unterkante des Heizleiters, oder abgeschrägt oder auch einfach oder mehrfach abgerundet sein. Da er ohnehin in der breiten Ausgestaltung nicht in den Tragkörper eingedrückt werden soll, spielt dies keine Rolle. Hier können produktionstechnische Vorteile von geraden, schrägen oder abgerundeten Formen beliebig genutzt werden.

In Ausgestaltung der Erfindung kann eine Flächenleistung der Heizeinrichtung, die im Bereich des Heizleiters liegt bzw. dort bestimmt wird, wo ein Heizleiter verläuft, maximal 4 W/cm² betragen. Insbesondere kann eine Flächenleistung noch geringer sein, beispielsweise noch geringer als 2,5 W/cm². Bei derart geringen Leistungsdichten ist es von den Sicherheitsvorschriften her möglich, eine Heizeinrichtung ähnlich einer vorgenannten Strahlungsheizeinrichtung unter einer Kochfeldplatte zu betreiben, wobei sie dazu keine Temperaturüberwachung benötigt laut VDE. Sie kann also sozusagen ungesichert betrieben werden. Eine solche Sicherung bzw. Temperaturüberwachung wäre ein sogenannter Sicherheitstemperaturbegrenzer oder Stabregler, wie er auch beispielsweise in der eingangs genannten DE 42 29 375 A1 gezeigt ist.

Vorteilhaft bedeckt der mindestens eine Heizleiter einen Großteil der Fläche der Heizeinrichtung, wozu Bahnen des Heizleiters mit Abstand zwischen 5 mm und 20 mm zueinander auf dem Tragkörper verlaufen können. Sie können weitgehend bzw. zu mehr als 80% parallel zueinander verlaufen, beispielsweise mäanderförmig oder spiralig.

Das erfindungsgemäße Elektrokochgerät kann in einer Ausgestaltung ein Elektrokochfeld sein mit einer Kochfeldplatte und mehreren darunter angeordneten Heizeinrichtungen, die gemäß der Erfindung ausgebildet sind. Eine Bedienvorrichtung ist am Kochfeld vorgesehen auf an sich bekannte Art und Weise, mit der ein Betrieb des Kochfelds gesteuert werden kann.

In einer alternativen Ausgestaltung kann das erfindungsgemäße Elektrokochgerät ein Backofen sein, wobei es hier vorteilhaft denkbar ist, dass die Heizeinrichtung in dem Backofen als Oberhitze und/oder Unterhitze verbaut wird. Mit der Erfindung kann nämlich eine relativ günstige Heizeinrichtung für diesen Zweck geschaffen werden.

Diese und weitere Merkmale gehen außer aus den Ansprüchen auch aus der Beschreibung und den Zeichnungen hervor. Die Unterteilung der Anmeldung in einzelne Abschnitte und Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
Fig. 1 eine seitliche Schnittdarstellung durch ein erfindungsgemäßes Elektrokochfeld mit einer unter einer Kochfeldplatte angeordneten Heizeinrichtung, die nicht Teil dieser Erfindung ist.
Fig. 2 eine Vergrößerung eines mittleren Bereichs der Heizeinrichtung alleine aus Fig. 1,
Fig. 3 eine Darstellung einer ersten Ausgestaltung eines Heizleiters ähnlich Fig. 2,
Fig. 4 eine Draufsicht auf einen Abschnitt eines Heizleiters ähnlich dem Verlegemuster von Fig. 1,
Fig. 5 eine alternative Ausgestaltung eines Heizleiters mit anders ausgebildeten Haltegliedern, der nicht Teil dieser Erfindung ist,
Fig. 6 eine alternative Ausgestaltung einer Heizeinrichtung ähnlich Fig. 2 ohne Abstand zwischen Stützvorrichtung und Tragkörper und nicht Teil dieser Erfindung ist,
Fig. 7 zeigt eine Ausgestaltung eines Heizleiters gemäß der Erfindung mit nochmals anders ausgebildeten Haltegliedern.

### Detaillierte Beschreibung der Ausführungsbeispiele

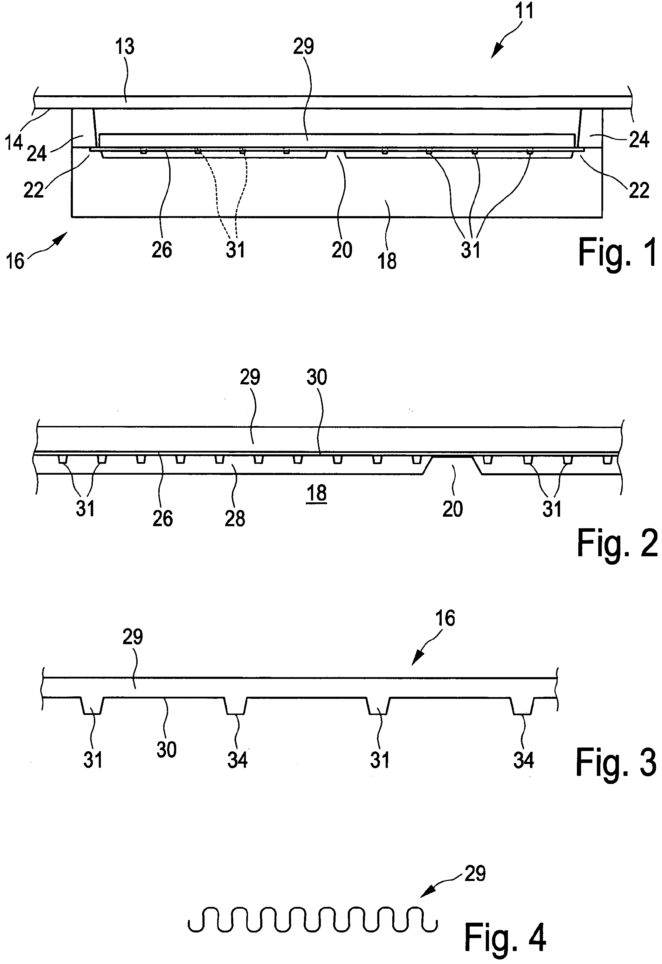

In der Fig. 1 ist ein Ausschnitt eines Elektrokochfelds 11 von der Seite dargestellt. Das Elektrokochfeld 11 weist eine Kochfeldplatte 13 auf, gegen deren Unterseite 14 eine erfindungsgemäße Heizeinrichtung 16 auf nicht näher dargestellte Art und Weise angedrückt ist. Dies erfolgt vorteilhaft wie allgemein von solchen Elektrokochfeldern bekannt und muss hier nicht näher erläutert werden. Die Heizeinrichtung 16 weist einen flächigen und dicken Stützteller 18 als vorgenannte Stützvorrichtung auf. Seine Oberfläche ist im Wesentlichen eben, nur in der Mitte ist ein Stützvorsprung 20 ausgebildet mit wenigen Millimetern Höhe. Außen am Stützteller 18 ist ein umlaufender und gestuft ausgebildeter Stützrand 22 ausgebildet. Auf diesem Stützrand 22 liegt ein Ringkörper 24 auf, der umlaufend ist und der mit seiner Oberseite gegen die Unterseite 14 gedrückt ist. Stützteller 18 und Ringkörper 24 sind aus geeignetem und bekanntem thermischen Dämmmaterial ausgebildet, möglicherweise unterschiedliches Material. Dieser grundsätzliche Aufbau ist aus dem Stand der Technik bekannt, siehe die eingangs genannte DE 25 51 137 A1 und DE 42 29 375 A1.

Auf dem zentralen Stützvorsprung 20 und der Stufe des Stützrands 22 ist ein Tragkörper 26 aufgelegt. Er ist vorteilhaft eine runde Scheibe oder Platte aus eingangs genanntem Mikanit mit einer Dicke von beispielsweise 0,5 mm. Durch die Unterstützung in der Mitte mittels des Stützvorsprungs 20 reicht die Eigenstabilität auch einer derart dünnen Platte aus Mikanit beim Tragkörper 26 aus, dass dieser sich nicht oder nur unwesentlich bzw. nicht störend nach unten durchbiegt. Das Mikanit ist hier mit Kunstharz verklebter gemahlener Glimmer.

Im Außenrandbereich ist der Tragkörper 26 erkennbar zwischen dem Stützrand 22 von unten und dem Ringkörper 24 von oben gehaltert bzw. sozusagen zwischen diesen eingeklemmt. So ist seine Anordnung in der Heizeinrichtung 16 sicher und ändert sich nicht, weder während Betrieb noch während Transport.

Der Tragkörper 26 weist auf seiner Oberseite einen Heizleiter 29 auf, wie er eingangs beschrieben worden ist. Der Heizleiter 29 ist ein aufrechtstehendes gewelltes Flachband, das mit einer Unterkante auf der Oberseite des Tragkörpers 16 aufliegt. Durch hier leicht angedeutete Halteglieder 31 ist der Heizleiter 29 am Tragkörper 26 befestigt. Dazu sind diese Halteglieder, wie aus der Vergrößerung der Fig. 2 besser zu ersehen ist, durch den Tragkörper 26 aus Mikanit hindurchgesteckt und ragen unten aus dem Tragkörper 26 mit einem gewissen Überstand wieder hervor. Aus der vergrößerten Fig. 2 ist auch zu erkennen, dass eine Unterkante 30 des Heizleiters 29 direkt auf der Oberseite des Tragkörpers 26 aufliegt. Dies ergibt sich dadurch, dass der Heizleiter 29 beim Eindrücken der Halteglieder 31 mit Kraft gegen den Tragkörper 26 gedrückt ist und sozusagen ein Anschlag dadurch gebildet wird, dass die Unterkante 30 an der Oberseite des Tragkörpers 26 anschlägt bzw. aufliegt. Bei anderen Dämmmaterialien kann die Unterkante etwas darin eingedrückt werden, bei dem Mikanit hier aber nicht.

Ein solches Eindrücken entspricht im Wesentlichen einem Fertigungsverfahren, wie es für bekannte Strahlungsheizkörper gemäß der vorgenannten DE 25 51 137 A1 und DE 42 29 375 A1 verwendet wird. Insofern wird hier auf diesen Stand der Technik verwiesen.

Es ist auch erkennbar aus der Darstellung der Fig. 1 und 2, dass vorteilhaft zuerst der Heizleiter 29 am Tragkörper 26 durch Eindrücken und Einstechen der Halteglieder 31 befestigt wird. Erst dann wird der Tragkörper 26 mit dem Heizleiter 29 darauf in der Heizeinrichtung 16 verbaut. Ansonsten wäre die notwendige Stabilität beim Eindrücken nicht gewährleistet.

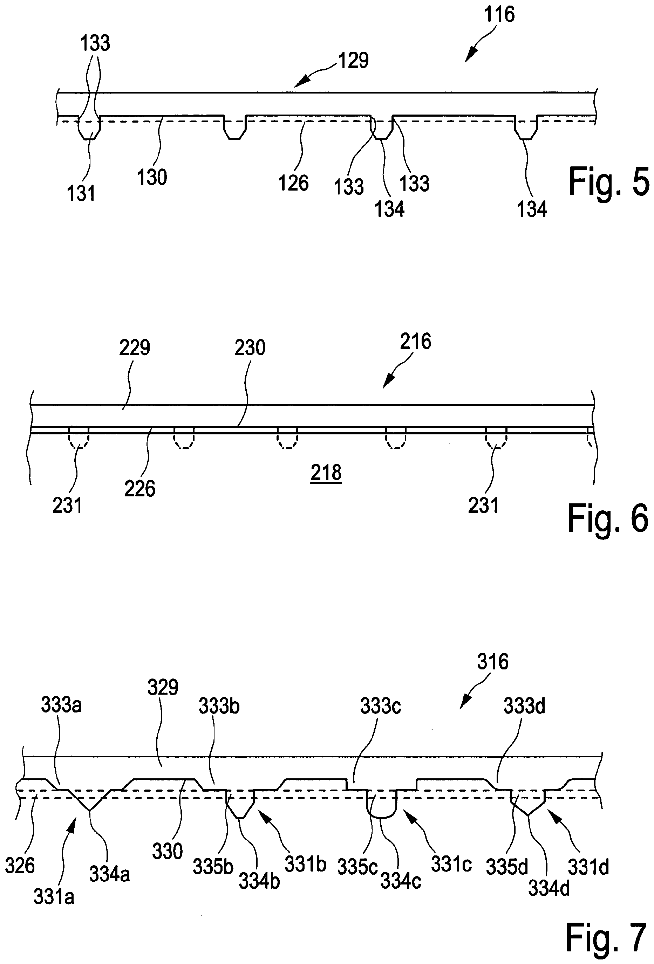

Ein Luftraum 28 zwischen Tragkörper 26 bzw. seiner Unterseite und dem Stützteller 18 bzw. dessen Oberseite kann maximal wenige Millimeter hoch sein, beispielsweise maximal 5 mm hoch sein. Dieser Luftraum 28 kann als zusätzliche thermische Dämmung fungieren zwischen Heizleiter 29 bzw. dem vom Heizleiter erhitzten Tragkörper 26 und dem Stützteller 18. Des Weiteren stören so die über die Unterseite des Tragkörpers 26 überstehenden Halteglieder 31 des Heizleiters 29 nicht. Der Luftraum 28 könnte aber auch ganz wegfallen, siehe Fig. 6.

Als nochmals weitere Alternative könnte der Stützteller 18 aus thermischem Dämmmaterial ganz wegfallen, so dass der Tragkörper 26 mit dem Heizleiter 29 darauf nur noch in einem für Strahlungsheizkörper üblichen Blechteller gehaltert ist. Dann kann zwischen Tragkörper 26 und Boden eines solchen Blechtellers ein Abstand vorgesehen sein, beispielsweise mehr als 1 mm bis 10 mm, der sowohl einer elektrischen Isolierung als auch vor allem einer thermischem Dämmung dienen kann.

In der Fig. 3 ist zu seiner Veranschaulichung ein Heizleiter 29 im glatt gezogenen langen Zustand dargestellt. Der Heizleiter 29 weist eine im Wesentlichen gerade durchgehende Unterkante 30 auf, aus der in regelmäßigen Abständen die Halteglieder 31 integral nach unten herausstehen. Wie hier zu erkennen ist, sind die Halteglieder 31 über ihre gesamte Länge verjüngt ausgebildet. Sie sind nach unten an einem unteren Ende 34 nicht spitz zulaufend, noch nicht einmal abgerundet, sondern gerade abgeschnitten. Aber auch die anderen Möglichkeiten können umgesetzt sein. Dieser Heizleiter 29 wird bevorzugt aus einem breiten Band oder flächigen Flachbandmaterial herausgestanzt.

In der Fig. 4 ist eine Draufsicht auf einen Heizleiter 29 dargestellt, der hier gewellt ist. Damit soll verdeutlicht werden, dass der Heizleiter 29 eben nicht im langgestreckten oder auseinandergezogenen Zustand auf dem Tragkörper 26 befestigt wird, was grundsätzlich aber auch möglich wäre. Aus der Ansicht der Fig. 4 von oben sind die Halteglieder 31 entsprechend Fig. 3 nicht zu erkennen. Anhand dieser Darstellung ist jedoch leicht vorstellbar, dass zumindest diejenigen Halteglieder 31, die im Bereich einer starken Krümmung oder Wellung entsprechend Fig. 4 von einer Unterkante des Heizleiters 29 abstehen, entsprechend gekrümmt sind. Dadurch ergibt sich die eingangs genannte Wölbung der Halteglieder. Dies kommt zum einen nahezu zwingend durch die Wellung entsprechend Fig. 4. Zum anderen weist dies den großen Vorteil auf, dass durch diese Wellung die Halteglieder 31 stabiler bzw. steifer werden, soweit sie dadurch umgeformt sind, und so leichter in den Tragkörper 26 eingedrückt werden können.

In der Fig. 5 ist ein alternativer Heizleiter 129 einer Heizeinrichtung 116 dargestellt. Von einer Unterkante 130 gehen wiederum in regelmäßigen Abständen Halteglieder 131 ab. Die Halteglieder 131 sind hier jedoch anders ausgebildet. Sie weisen direkt an die Unterkante 130 anschließend einen Sockelbereich 133 auf, der gleichbleibende Breite aufweist und der beispielsweise 2 mm lang sein kann. An diesen Sockelbereich 133 schließt sich eine verjüngte Spitze 134 an. Diese wiederum ist ähnlich Fig. 3 ausgebildet.

Der Vorteil dieser Ausgestaltung der Halteglieder 131 ist gut zu erkennen, wenn man den gestrichelt dargestellten Tragkörper 126 bzw. den Einbauzustand daran betrachtet. Die Halteglieder 134 befinden sich mit dem Sockelbereich 133 in dem Tragkörper 126, und dadurch, dass sie hier noch nicht verjüngt oder angeschrägt sind, halten sie besser darin bzw. können nicht so leicht herausgedrückt werden. Die parallelen Außenkanten sind bezüglich Herausdrücken neutral. Dies ist eingangs ja erläutert worden.

Die Ausgestaltung der Spitze 134 kann vielfältig variieren, sie kann einerseits tatsächlich spitz sein, alternativ kann sie auch leicht abgerundet sein, was ebenfalls ein Einstecken in den Tragkörper 126 erleichtert.

Allgemein können im Tragkörper 126 bereits Vertiefungen oder Ausnehmungen vorgefertigt oder ausgetanzt sein, die das Einstecken erleichtern sollen. Sie müssten dann allerdings genau passend zu dem Ort des einzusteckenden Halteglieds liegen.

In der Fig. 6 ist eine alternative Heizeinrichtung 216 im Ausschnitt ähnlich Fig. 2 dargestellt. Hier ist ein Heizleiter 229 mit den gepunktet dargestellten Haltegliedern 231 entsprechend Fig. 3 nicht nur in den Tragkörper 226 eingesteckt, sondern auch in den direkt darunter verlaufenden ebenen Stützteller 218. Die Reihenfolge sollte auch genau diese sein. Es ist zwar grundsätzlich möglich, den Heizleiter 229 mit den Haltegliedern 231 direkt auf den Schichtverbund aus Tragkörper 226 und Stützteller 218 zu drücken und die Halteglieder 231 dabei in beide einzudrücken. Dies wird als voraussichtlich schwierig angesehen, so dass ein zweistufiges Eindrücken als bevorzugt anzusehen ist. Der Tragkörper 226 mit den Haltegliedern 231 darin wird dann auf den Stützteller 218 gelegt und gedrückt, so dass die unteren Spitzen der Halteglieder 231 sich auch darin eindrücken.

Bei der Heizeinrichtung 216 entsprechend Fig. 6 fällt der zu Fig. 2 erläuterte Luftraum 28 zugegebenermaßen weg, die thermische Dämmung ist also erkennbar schlechter. Falls die Heizeinrichtung aber nicht zwingend mit sehr hohen Temperaturen von bis zu 350°C oder kurzfristig bis 700°C arbeiten soll, kann auf diese Art der Verbesserung der thermischen Dämmung verzichtet werden, und dafür ein einfacher und mechanisch stabilerer Aufbau bevorzugt werden.

Eine Flächenleistung für die Heizeinrichtung 16 entsprechend Fig. 1 liegt vorteilhaft bei den vorgenannten maximal 4 W/cm². Besonders vorteilhaft liegt sie unter 2,5 W/cm², dann kann die Heizeinrichtung 16 als Warmhaltebereich odgl. im Elektrokochfeld 11 eingesetzt werden und braucht keine Temperaturüberwachung durch einen eingangs genannten Stabregler, wie er in den vorgenannten Dokumenten des Stands der Technik jeweils vorhanden ist. Eine Betriebstemperatur des Heizleiters 29 selbst kann dann beispielsweise zwischen 100°C und 250°C liegen. Langfristig kann der Tragkörper 26 aus Mikanit etwa 500°C als Temperatur überstehen, je nach Binder des Tragkörpers bzw. des Glimmer-Materials sogar noch etwas mehr. Kurzfristig können es für weniger als eine Minute bis zu 700°C sein. Grundsätzlich soll eine derartige Heizeinrichtung aber nicht für derart hohe Temperaturen am Limit ausgelegt sein, sondern eben maximal 350°C oder nur maximal 150°C. Bei einem eingangs genannten Kochfeld ist dies dann eine sogenannte Warmhaltekochstelle.

Der Trägerkörper besteht besonders vorteilhaft aus einer Platte aus Mikanit mit Muskovit, alternativ mit Phlogopit. Dies ist ein Kunstglimmer, der aus gespaltenem, gebrochenem oder gemahlenem Glimmer des entsprechenden Materials hergestellt wird. Dazu werden deren Bruchstücke mit Kunstharz als Bindemittel verpresst und verbacken, beispielsweise als sehr dicke Glimmerfolie oder als Glimmertafel bzw. eben vorbeschriebene Glimmerplatte. Dessen Herstellung ist dem Fachmann jedoch bekannt.

In der Fig. 7 ist ein Erfindungsgemäßer Heizleiter 329 einer Heizeinrichtung 316 dargestellt.

Von einer Unterkante 330 des Heizleiters 329 stehen in regelmäßigen Abständen Halteglieder 331a bis 331d nach unten ab. Die Halteglieder 331 sind hier jedoch jeweils unterschiedlich ausgebildet, was nur der Anschaulichkeit halber so dargestellt ist. In der Praxis sind vorteilhaft sämtliche Halteglieder 331 identisch ausgebildet. Sie weisen aber alle direkt an die Unterkante 330 anschließend einen Sockelbereich 333a bis d auf, der unterschiedliche Breite aufweisen kann, vorteilhaft zwischen 5 mm und 15 mm. An den jeweiligen Sockelbereich 333 schließt sich jeweils eine verjüngte Spitze 334 an. Die verjüngte Spitze 334 kann ähnlich der vorherigen Figuren ausgebildet sein.

Beim Halteglied 331a ganz links geht der Sockelbereich 333a mit einer Schräge von der Unterkante 330 ab. Der Sockelbereich 333a liegt an der Oberseite des Tragkörpers 326 auf. Mittig von dem Sockelbereich 333a geht eine verjüngte Spitze 334a ab, die spitz zulaufend ausgebildet ist. Diese verjüngte Spitze 334a ist durch den Tragkörper 326 hindurch gesteckt oder hindurch gestochen und stellt somit die Befestigung des Heizleiters 329 am Tragkörper 326 dar, wobei die verjüngte Spitze 334 a selbst im Tragkörper 326 gehalten ist. Durch den erkennbaren breiten Auflagebereich der Unterkante des Sockelbereichs 333a links und rechts von der verjüngte Spitze 334a auf dem Tragkörper 326 ist eine stabile Halterung möglich. Ein weiteres Eindrücken in den Tragkörper 396 ist kaum möglich und außerdem auch nicht beabsichtigt. Hier ist auch zu erkennen, wie links und rechts von dem Halteglied 331a die Unterkante 330 des Heizleiters 329 deutlich über der Oberseite des Tragkörpers 326 verläuft.

Beim zweiten Halteglied 331b ist ein ähnlich ausgebildeter Sockelbereich 333b vorgesehen. Eine mittig davon abstehende verjüngte Spitze 334b weist direkt an den Sockelbereich 333b anschließend einen Zusatz-Sockelbereich 335b auf. Dieser Zusatz-Sockelbereich 335b weist gleichbleibende Breite auf. Er befindet sich im Tragkörper 326, auf dessen Oberseite die Unterkante des Sockelbereichs 333 b aufliegt. Der Zusatz-Sockelbereich 335b ragt ein kleines Stück nach unten über den Tragkörper 326 über, wobei sich dann an ihn die verjüngte Spitze 334b anschließt. Diese dient vor allem zum leichteren Eindrücken des gesamten Halteglied 331b in den Tragkörper 326.

Beim dritten Halteglied 331c ist ebenfalls ein Sockelbereich 333c vorgesehen, der von der Unterkante 330 des Heizleiters 329 absteht. Allerdings steht er nicht schräg ab, sondern weitgehend rechtwinklig. Mittig von seiner Unterkante steht ein Zusatz-Sockelbereich 335c mit gleichbleibender Breite nach unten ab, der in eine abgerundete verjüngte Spitze 334c mündet. Der Bereich der Unterkante des Sockelbereichs 333c links und rechts von dem Zusatz-Sockelbereich 335c ist wiederum relativ breit und kann auch bei Krafteinwirkung gut auf der Oberseite des Tragkörper 326 abgestützt sein, ohne eingedrückt zu werden. Auch hier verläuft der Zusatz-Sockelbereich 335c vollständig durch den Tragkörper 326 hindurch. Die abgerundete Spitze 334c kann, wie eingangs erläutert, Vorteile beim Eindrücken und/oder Herstellen gegenüber einer schrägen Spitze aufweisen.

Beim vierten Halteglied 331d verläuft ein Sockelbereich 333d mit abgerundete Form von der Unterkante 330 des Heizleiters 329 nach unten. Auch hier ist wiederum mittig ein Übergang in einen Zusatz-Sockelbereich 335d des Halteglieds 331d vorgesehen, und zwar in einen Zusatz-Sockelbereich 335d, der gleichbleibende Breite aufweist. Daran schließt sich eine spitze verjüngte Spitze 334d an, die zum Einstecken in bzw. durch den Tragkörper 326 dient. Die abgerundete Form des Sockelbereichs 333d kann möglicherweise eine Herstellung des Heizleiters 329 erleichtern sowie Mikrobeschädigungen an der Unterkante 330 im Übergang zum Sockelbereich 333d verhindern.

Auch wenn der Abstand der verjüngten Spitzen 334a bis d bei der Fig. 7 ähnlich ist wie bei den Fig. 3 bis 6, so sollte in der Praxis der Abstand größer sein als dort. Insbesondere sollte eine Länge der freien Unterkante 330 des Heizleiters 329 ähnlich sein wie in den Fig. 3 bis 6. Aus der Fig. 7 ist nämlich zu ersehen, dass bei einer hier gewählten Dimensionierung der Abstand der Halteglieder 331a bis d relativ gering ist, sodass die sich daraus ergebenden Vergrößerungen bzw. Verbreiterungen des Heizleiterquerschnitts zu starke negative Auswirkungen auf ein gleichmäßiges Glühbild bzw. eine gleichmäßige Heizwirkung der Heizeinrichtung 316 aufweisen könnten.

## Patentansprüche

1. Heizeinrichtung (316), insbesondere für ein Elektrokochgerät (11), die aufweist:
- mindestens einen langen Heizleiter (329),
- einen Tragkörper (326), auf dessen Oberseite der Heizleiter (329) angeordnet und befestigt ist,
- eine Stützvorrichtung (20, 22) für den Tragkörper (326),
wobei:
- der Heizleiter (329) als gewelltes Flachband ausgebildet ist, das zumindest an seiner Unterseite (330) im Abstand voneinander angeordnete Halteglieder (331) aufweist, die nach unten überstehen oder abstehen,
- die Halteglieder (331) in der Tragkörper (326) eingedrückt sind,
- die Stützvorrichtung (20, 22) den Tragkörper (326) zumindest in seinem Außenbereich und/oder entlang eines Außenrandes nach unten abstützt,
- der Tragkörper (326) aus verpresstem und/oder verklebtem Glimmer-Material besteht,
- die Halteglieder (331) in ihrem Längsverlauf weg vom Heizleiter (329) verjüngt ausgebildet sind und eine verjüngte freie Spitze (334) aufweisen,
**dadurch gekennzeichnet, dass**
- ein an einer Unterkante (330) des Heizleiters (329) anschließender Sockelbereich (333) eines Halteglieds (331) mit einer Länge in Richtung quer vom Heizleiter (329) weg zwischen 0,1 mm und 2 mm vorgesehen ist,
- sich an den Sockelbereich (333) die verjüngte freie Spitze (334) anschließt,
- die verjüngte Spitze (334) im oberen breiteren Bereich schmaler ist als eine minimale Breite des Sockelbereichs (333).

2. Heizeinrichtung nach Anspruch 1, **dadurch gekennzeichnet, dass** ein thermischer Ausdehnungskoeffizient des Tragkörpers (326) bzw. des Materials des Tragkörpers, insbesondere bis zu einer Temperatur von 250°C, um maximal 10% von demjenigen des Heizleiters (329) abweicht, vorzugsweise gleich ist.

3. Heizeinrichtung nach Anspruch 1 oder 2, **dadurch gekennzeichnet, dass** das Glimmer-Material Mikanit ist.

4. Heizeinrichtung nach einem der vorhergehenden Ansprüche, **dadurch gekennzeichnet, dass** der Tragkörper (326) als Platte ausgebildet ist, insbesondere mit einer ebenen Oberseite, auf der der mindestens eine Heizleiter (329) angeordnet ist, wobei vorzugsweise der Tragkörper (326) eine dünne planparallele Platte ist mit einer Dicke zwischen 0,1 mm und 2 mm.

5. Heizeinrichtung nach einem der vorhergehenden Ansprüche, **dadurch gekennzeichnet, dass** im Bereich des Außenrandes des Tragkörpers (326), insbesondere zusammen mit der Stützvorrichtung (20, 22), Abstandshalter (24) nach oben über die Oberseite des Tragkörpers (326) hinaus vorgesehen sind, insbesondere als im Wesentlichen durchgängig umlaufender Ring, um einen Abstand zu einer darüber angeordneten Kochfeldplatte (13) eines Kochfeldes (11) einzuhalten.

6. Heizeinrichtung nach einem der vorhergehenden Ansprüche, **dadurch gekennzeichnet, dass** die Halteglieder (331) integral aus dem Heizleiter (329) herausgeformt sind bzw. integral an diesem angeformt sind, insbesondere aus dem selben durchgängigen Flachbandmaterial bestehen und von einer Unterkante (330) des Heizleiters (329) einteilig und einstückig nach unten vorstehen.

7. Heizeinrichtung nach einem der vorhergehenden Ansprüche, **dadurch gekennzeichnet, dass** eine Länge der Halteglieder (331) 50% bis 200% der Höhe des Heizleiters (329) beträgt und/oder zwischen 1 mm und 6 mm liegt.

8. Heizeinrichtung nach einem der vorhergehenden Ansprüche, **dadurch gekennzeichnet, dass** zumindest einige Halteglieder (331) in ihrem Längsverlauf weg vom Heizleiter (329) gewölbt sind, vorzugsweise mehr als die Hälfte aller Halteglieder (331) derart gewölbt sind.

9. Heizeinrichtung nach einem der vorhergehenden Ansprüche, **dadurch gekennzeichnet, dass** der Sockelbereich (333) gleichbleibende Breite aufweist, wobei vorzugsweise jedes Halteglied (331) an genau einem einzigen dafür vorgesehenen Sockelbereich (333) ausgebildet ist.

10. Heizeinrichtung nach einem der vorhergehenden Ansprüche, **dadurch gekennzeichnet, dass** der Sockelbereich (333) eine Breite in Richtung entlang der Längsrichtung des Heizleiters (329) aufweist zwischen 2 mm und 10 mm bzw. zwischen 100% und 400% der Höhe des Heizleiters.

11. Heizeinrichtung nach einem der Ansprüche 9 oder 10, **dadurch gekennzeichnet, dass** der Sockelbereich (333) nicht im Tragkörper (326) angeordnet ist bzw. oberhalb davon verläuft oder auf den Tragkörper (326) aufgelegt ist, vorzugsweise angedrückt oder aufgedrückt ist.

12. Heizeinrichtung nach einem der vorhergehenden Ansprüche, **dadurch gekennzeichnet, dass** eine Flächenleistung im Bereich des Heizleiters (329) maximal 4 W/cm² beträgt, insbesondere weniger als ca. 2,5 W/cm².

13. Elektrokochgerät mit mindestens einer Heizeinrichtung (316) nach einem der vorhergehenden Ansprüche, **dadurch gekennzeichnet, dass** das Elektrokochgerät als Elektrokochfeld (11) oder als Elektrobackofen ausgebildet ist.

## Claims

1. Heating device (316), in particular for an electric cooking appliance (11), which heating device has:
- at least one long heating conductor (329),
- a carrying body (326) on the top side of which the heating conductor (329) is arranged and fixed,
- a supporting apparatus (20, 22) for the carrying body (326),
wherein:
- the heating conductor (329) is designed as a corrugated flat strip which has, at least on its bottom side (330), holding members (331) which are arranged at a distance from one another and project or protrude downward,
- the holding members (331) are pushed into the carrying body (326),
- the supporting apparatus (20, 22) supports the carrying body (326), at least in its outer region and/or along an outer edge, at the bottom,
- the carrying body (326) consists of compressed and/or adhesively bonded mica material,
- the holding members (331) are of tapered design in their longitudinal profile away from the heating conductor (329) and have a tapered free tip (334), **characterized in that**
- a base region (333) of a holding member (331), which base region adjoins a bottom edge (330) of the heating conductor (329), is provided with a length of between 0.1 mm and 2 mm in a direction transversely away from the heating conductor (329),
- the tapered free tip (334) adjoins the base region (333),
- the tapered tip (334) is narrower in the upper wider region than a minimum width of the base region (333).

2. Heating device according to claim 1, **characterized in that** a coefficient of thermal expansion of the carrying body (326) or of the material of the carrying body, in particular up to a temperature of 250°C, differs by at most 10% from, preferably is identical to, that of the heating conductor (329).

3. Heating device according to claim 1 or 2, **characterized in that** the mica material is micanite.

4. Heating device according to any of the preceding claims, **characterized in that** the carrying body (326) is designed as a plate, in particular with a planar top side, on which the at least one heating conductor (329) is arranged, wherein the carrying body (326) is preferably a thin plane-parallel plate with a thickness of between 0.1 mm and 2 mm.

5. Heating device according to any of the preceding claims, **characterized in that** spacers (24) are provided at the top beyond the top side of the carrying body (326), in particular as a substantially continuously encircling ring, in the region of the outer edge of the carrying body (326), in particular together with the supporting apparatus (20, 22), in order to maintain a distance from a cooktop plate (13) of a cooktop (11), which cooktop plate is arranged above said carrying body.

6. Heating device according to any of the preceding claims, **characterized in that** the holding members (331) are integrally formed from the heating conductor (329) or are integrally formed on said heating conductor, in particular consist of the same continuous flat strip material and protrude downward in one piece and in one part from a bottom edge (330) of the heating conductor (329).

7. Heating device according to any of the preceding claims, **characterized in that** a length of the holding members (331) is 50% to 200% of the height of the heating conductor (329) and/or lies between 1 mm and 6 mm.

8. Heating device according to any of the preceding claims, **characterized in that** at least some holding members (331) are curved in their longitudinal profile away from the heating conductor (329), preferably more than half of all holding members (331) are curved in such a way.

9. Heating device according to any of the preceding claims, **characterized in that** the base region (333) has a constant width, where each holding member (331) is preferably formed on precisely one single base region (333) which is provided for it.

10. Heating device according to any of the preceding claims, **characterized in that** the base region (333) has a width of between 2 mm and 10 mm and, respectively, of between 100% and 400% of the height of the heating conductor (329) in a direction along the longitudinal direction of the heating conductor.

11. Heating device according to any of claims 9 or 10, **characterized in that** the base region (333) is not arranged in the carrying body (326) and, respectively, runs above or is placed onto, preferably pressed against or pressed onto, the carrying body (326).

12. Heating device according to any of the preceding claims, **characterized in that** a power per unit area in the region of the heating conductor (329) is at most 4 W/cm², in particular is less than approximately 2.5 W/cm².

13. Electric cooking appliance comprising at least one heating device (316) according to any of the preceding claims, **characterized in that** the electric cooking appliance is designed as an electric cooktop (11) or as an electric oven.

## Revendications

1. Dispositif de chauffage (316), en particulier pour un appareil de cuisson électrique (11), comprenant :
- au moins un conducteur chauffant (329) long,
- un corps porteur (326) à la face supérieure duquel le conducteur chauffant (329) est arrangé et fixé,
- un dispositif de support (20, 22) pour le corps porteur (326),
dans lequel :
- le conducteur chauffant (329) est configuré sous forme de bande plate ondulée, ladite bande présente au moins sur sa face inférieure (330) des éléments de maintien (331) disposés à distance les uns des autres, lesdits éléments de maintien dépassant ou faisant saillie vers le bas,
- les éléments de maintien (331) sont enfoncés dans le corps porteur (326),
- le dispositif de support (20, 22) supporte le corps porteur (326) au moins dans sa zone extérieure et/ou le long d'un bord extérieur vers le bas,
- le corps porteur (326) se compose de matériau mica comprimé et/ou collé,
- les éléments de maintien (331) s'effilent dans leur extension longitudinale loin du conducteur chauffant (329) et présentent une pointe libre (334) effilée, **caractérisé en ce que**
- une partie de base (333) adjacente à un bord inférieur (330) du conducteur chauffant (329) d'un élément de maintien (331) est prévue d'une longueur dans la direction transversalement loin du conducteur chauffant (329) comprise entre 0,1 mm et 2 mm,
- la pointe libre (334) effilée est adjacente à la partie de base (333),
- la pointe (334) effilée est plus étroite dans la zone supérieure plus large qu'une largeur minimale de la partie de base (333).

2. Dispositif de chauffage selon la revendication 1, **caractérisé en ce qu'**un coefficient de dilatation thermique du corps porteur (326) ou bien du matériau du corps porteur, en particulier jusqu'à une température de 250°C, est différent de 10 % au maximum du coefficient du conducteur chauffant (329), de préférence est égale.

3. Dispositif de chauffage selon la revendication 1 ou 2, **caractérisé en ce que** le matériau mica est micanite.

4. Dispositif de chauffage selon l'une quelconque des revendications précédentes, **caractérisé en ce que** le corps porteur (326) est sous forme de plaque, en particulier avec une face supérieure plane, sur ladite face supérieure l'au moins un conducteur chauffant (329) est arrangé, dans lequel de préférence le corps porteur (326) est une plaque mince plane parallèle présentant une épaisseur comprise entre 0,1 mm et 2 mm.

5. Dispositif de chauffage selon l'une quelconque des revendications précédentes, **caractérisé en ce que** dans la zone du bord extérieur du corps porteur (326), en particulier ensemble avec le dispositif de support (20, 22), écarteurs (24) sont prévus vers le haut au-delà de la face supérieure du corps porteur (326), en particulier sous forme d'anneau circonférentiel essentiellement en continu, afin de conserver une distance à une plaque de table de cuisson (13) d'une table de cuisson électrique (11) disposée au-dessus.

6. Dispositif de chauffage selon l'une quelconque des revendications précédentes, **caractérisé en ce que** les éléments de maintien (331) sont formés intégralement du conducteur chauffant (329) ou bien sont surmoulés intégralement sur celui-ci, en particulier sont composés du même matériau de la bande plate en continu et font saillie d'un bord inférieur (330) du conducteur chauffant (329) d'une pièce et solidairement vers le bas.

7. Dispositif de chauffage selon l'une quelconque des revendications précédentes, **caractérisé en ce qu'**une longueur des éléments de maintien (331) est 50 % à 200 % de la hauteur du conducteur chauffant (329) et/ou est comprise entre 1 mm et 6 mm.

8. Dispositif de chauffage selon l'une quelconque des revendications précédentes, **caractérisé en ce qu'**au moins certains des éléments de maintien (331) sont voûtés dans leur extension longitudinale loin du conducteur chauffant (329), de préférence plus que la moitié de tous les éléments de maintien (331) sont tellement voûtés.

9. Dispositif de chauffage selon l'une quelconque des revendications précédentes, **caractérisé en ce que** la partie de base (333) présente une largeur constante, dans lequel de préférence chaque élément de maintien (331) est formé exactement sur une seule partie de base (333) prévue à cet effet.

10. Dispositif de chauffage selon l'une quelconque des revendications précédentes, **caractérisé en ce que** la partie de base (333) présente une largeur dans la direction le long de la direction longitudinale du conducteur chauffant (329) comprise entre 2 mm et 10 mm, ou entre 100 % et 400 % de la hauteur du conducteur chauffant.

11. Dispositif de chauffage selon l'une quelconque des revendications 9 ou 10, **caractérisé en ce que** la partie de base (333) n'est pas disposé au corps porteur (326) ou s'étend au-dessus de celui-ci ou est placée sur le corps porteur (326), de préférence appuyé ou engagé par pression.

12. Dispositif de chauffage selon l'une quelconque des revendications précédentes, **caractérisé en ce qu'**un rendement surfacique dans la zone du conducteur chauffant (329) est 4 W/cm² au maximum, en particulier inférieur à environ 2,5 W/cm².

13. Appareil de cuisson électrique avec au moins un dispositif de chauffage (316) selon l'une quelconque des revendications précédentes, **caractérisé en ce que** l'appareil de cuisson électrique est configuré sous forme de table de cuisson électrique (11) ou sous forme de four électrique.
